# EUROPEAN PATENT SPECIFICATION

(11) **EP 4 575 248 B1**
(45) Date of publication and mention of the grant of the patent: **28.10.2026**
(21) Application number: 23925094.7
(22) Date of filing: 20.12.2023
(51) Int. Cl.: G06F 1/16, F16C 11/12, F16C 11/10

(54) **HINGE STRUCTURE AND FOLDABLE DEVICE**
SCHARNIERSTRUKTUR UND KLAPPBARE VORRICHTUNG
STRUCTURE DE CHARNIÈRE ET DISPOSITIF PLIABLE

(30) Priority: 27.02.2023 CN 202320412331 U
(43) Date of publication of application: 25.06.2025
(73) Proprietor: Huawei Technologies Co., Ltd., Shenzhen, Guangdong 518129 (CN)
(72) Inventor: PENG, Lexiong, Shenzhen, Guangdong 518129 (CN); WEI, Qinan, Shenzhen, Guangdong 518129 (CN); RAO, Yingchun, Shenzhen, Guangdong 518129 (CN); ZHAO, Jie, Shenzhen, Guangdong 518129 (CN); TU, Yiming, Shenzhen, Guangdong 518129 (CN)
(74) Representative: Grünecker Patent- und Rechtsanwälte PartG mbB
(86) International application number: PCT/CN2023/140426
(87) International publication number: WO 2024/179149

(56) References cited:
- CN-A- 103 677 111
- CN-A- 112 128 220
- CN-U- 204 493 437
- CN-U- 215 344 650
- CN-U- 216 691 846
- CN-U- 216 812 500
- CN-U- 218 509 946
- CN-U- 219 570 607
- JP-A- 2008 275 048
- US-A1- 2016 062 413

## Description

### TECHNICAL FIELD

This application relates to the field of connection structure technologies, and in particular, to a hinge structure and a foldable device.

### BACKGROUND

As computing capabilities continuously improve, tablet computers can not only meet daily entertainment requirements of users, but also form "notebook computers" in combination with keyboards, to meet specific office requirements of the users. When the tablet computers are used in a notebook computer mode, the tablet computers may be supported on desktops at a specific angle by using tablet computer protective cases with a supporting function, so that the users view content on screens conveniently.

A tablet computer protective case usually includes a back plate and a support plate. The back plate is attached onto a back surface of a tablet computer, and the support plate is disposed on the back plate in a foldable manner by using a hinge structure. When the tablet computer is used in a tablet computer mode, the support plate may be folded and accommodated. In this case, the support plate is attached onto the back plate. When the tablet computer is used in a notebook computer mode, a user may unfold the support plate. In this case, the tablet computer is supported on a desktop at a specific angle by using a supporting function of the support plate.

After the support plate is unfolded to a specific angle, the unfolding angle of the support plate needs to be locked (lock), to achieve good supporting effect. In this way, even if the tablet computer and the protective case are picked up together by the user, the support plate does not sway or fall back to be attached to a surface of the back plate under action of gravity. In a related technology, a flat position may be designed on a shaft core and a shaft sleeve. In this way, after the support plate is unfolded to a specific angle, the shaft sleeve can elastically clamp the shaft core, to implement a locking function. The technology not only requires the shaft sleeve to have a specific elastic deformation capability, but also requires the shaft core to bear sufficient torsion force. In this case, there are high requirements on material selection and sizes of shaft cores and shaft sleeves, resulting in high production and implementation costs of hinge structures.

CN 216 691 846 U discloses a hinge and a device using the hinge, comprising a shaft assembly with a first and second shaft arranged in parallel; a first hinge pivotable on the first shaft within a first angle, and a second hinge pivotable on the second shaft within a second angle; a first component on the first shaft and a second component on the second shaft, both in elastic contact with their respective hinges; with differing friction forces between the first component and the first hinge, and the second component and the second hinge, allowing the hinge to be fixed at multiple angle positions, enhancing angle adjustment versatility and ease of use.

CN 216 812 500 U describes a hinge structure that includes a rotating shaft assembly, a sliding rod, and a transmission mechanism. The rotating shaft assembly comprises a first cam, a second cam, and an elastic member arranged sequentially on the shaft. The first cam is fixed to the shaft and features a guiding slot, while the second cam is rotatably connected to the shaft and has a protrusion that interacts with the guiding slot. One end of the elastic member is connected to the second cam and the other end contacts the sliding rod, which is slidably mounted on the shaft. As the first cam rotates relative to the second cam, the transmission mechanism drives the sliding rod in the direction of the elastic member's extension, providing an elastic return force that allows the protrusion to slide into the guiding slot.

### SUMMARY

Embodiments of this application provide a hinge structure and a foldable device. Two shaft sleeves that respectively belong to two different bearing brackets are designed as a "concave wheel-cam mechanism", to implement hinge angle locking, so that production and implementation costs of the hinge structure can be reduced. The invention is defined according to the independent claims. The dependent claims recite advantageous embodiments.

According to a first aspect, a hinge structure is provided. The hinge structure includes: a first bearing bracket, where a first shaft sleeve is disposed on the first bearing bracket, and a boss structure is disposed on an end face of the first shaft sleeve; a second bearing bracket, where a second shaft sleeve is disposed on the second bearing bracket, and a groove structure is provided on an end face of the second shaft sleeve; a shaft core, where the first shaft sleeve and the second shaft sleeve are sleeved in parallel on the shaft core; and an elastic member, configured to, when the first bearing bracket and the second bearing bracket rotate relative to each other to a preset angle, enable the boss structure and the groove structure to be embedded into each other to lock a rotation angle.

According to the hinge structure provided in this embodiment of this application, the boss structure is disposed on the end face of the first shaft sleeve on the first bearing bracket, and the end face of the second shaft sleeve on the second bearing bracket is provided with the groove structure that cooperates with the boss structure to operate, so that the first shaft sleeve and the second shaft sleeve can form a "concave wheel-cam mechanism". When the first bearing bracket rotates relative to the second bearing bracket to the preset angle, the boss structure and the groove structure face each other directly. In this case, under action of elastic force of the elastic member, the boss structure can be embedded into the groove structure, so that rotation angles of the first bearing bracket and the second bearing bracket are locked. The hinge structure provided in this embodiment of this application is different from a hinge structure in a conventional flat position design solution in that a structure is simple, processing is easy, and there is no special requirement on material selection and sizes of the shaft core and the shaft sleeve. This helps reduce production and implementation costs of the hinge structure and improve product competitiveness. In addition, according to the hinge structure provided in this embodiment of this application, a size of the shaft sleeve can be designed to be smaller, and that a product appearance does not protrude at a rotating shaft can be implemented. This can ensure appearance consistency and help reduce a thickness of the product.

According to the above-mentioned embodiment of this application, the elastic member includes a cantilever, and the first shaft sleeve is elastically connected to the first bearing bracket by using the cantilever, and the second shaft sleeve is fastened at an edge of the second bearing bracket; or the second shaft sleeve is elastically connected to the second bearing bracket by using the cantilever, and the first shaft sleeve is fastened at an edge of the first bearing bracket.

In a possible design, the cantilever is a straight-strip-shaped structure or a bent structure.

In a possible design, the elastic member further includes a compression spring sleeved on the shaft core.

In a possible design, the first shaft sleeve is disposed on an edge of a first side that is of the first bearing bracket and that is in an axial direction, and the second shaft sleeve is correspondingly disposed on an edge of the first side of the second bearing bracket.

In a possible design, another second shaft sleeve is further disposed on an edge of the other side that is of the first bearing bracket and that is in the axial direction, and another first shaft sleeve is further correspondingly disposed on an edge of the other side of the second bearing bracket.

In a possible design, at least one third shaft sleeve is further spaced between the first shaft sleeve and the second shaft sleeve on the first bearing bracket; and/or at least one third shaft sleeve is further spaced between the first shaft sleeve and the second shaft sleeve on the second bearing bracket.

In a possible design, a plurality of first shaft sleeves are disposed on the first bearing bracket, a plurality of second shaft sleeves are disposed on the second bearing bracket, and the plurality of first shaft sleeves and the plurality of second shaft sleeves are disposed in a one-to-one correspondence.

In a possible design, at least one stop structure is disposed on each of the first bearing bracket and the second bearing bracket, and when the first bearing bracket and the second bearing bracket rotate relative to each other to the preset angle, the stop structure on the first bearing bracket and the stop structure on the second bearing bracket abut against and limit each other.

According to a second aspect, a foldable device is provided. The foldable device includes a first body, a second body, and the hinge structure provided in any possible design of the first aspect, and the hinge structure is hinged to the first body and the second body.

Optionally, the foldable device includes but is not limited to a tablet computer protective case having a supporting function, a keyboard support protective case, a door, a Bluetooth headset case, a glasses case, and the like. In addition, the foldable device may alternatively be an electronic device, for example, a notebook computer, a foldable mobile phone, a drone, a desk lamp, or a camera, an accessory of each of the foregoing electronic devices, and the like, but is not limited thereto.

### BRIEF DESCRIPTION OF DRAWINGS

FIG. 1 is a diagram of a structure of a hinge structure in a closed state according to an embodiment of this application;
FIG. 2 is a diagram of a structure of the hinge structure shown in FIG. 1 in an open state;
FIG. 3 is an exploded view of the hinge structure shown in FIG. 1;
FIG. 4 is a diagram of a connection relationship of a first bearing bracket in FIG. 1;
FIG. 5 is a diagram of end faces of a first shaft sleeve and a second shaft sleeve;
FIG. 6 is a diagram of a process in which a boss structure and a groove structure are embedded into each other;
FIG. 7 is a diagram of a structure of a cantilever in a plurality of different implementations;
FIG. 8 is a curve graph of a change of axial pressure and a detent distance for a specific cantilever size parameter;
FIG. 9 is a diagram of a structure of another hinge structure according to an embodiment of this application;
FIG. 10 is a diagram of a structure of still another hinge structure according to an embodiment of this application;
FIG. 11 is a diagram of a structure of yet another hinge structure according to an embodiment of this application;
FIG. 12 is a diagram of a structure of still yet another hinge structure according to an embodiment of this application;
FIG. 13 is a diagram of a structure of a further hinge structure according to an embodiment of this application;
FIG. 14 is a diagram of a structure of a still further hinge structure according to an embodiment of this application;
FIG. 15 is a diagram of a structure of a foldable device according to an embodiment of this application;
FIG. 16 is an exploded view of the foldable device shown in FIG. 15; and
FIG. 17 is a diagram of a structure of the foldable device shown in FIG. 16 in a closed state.

### Reference numerals:

100: hinge structure; 110: first bearing bracket; 120: second bearing bracket; 130: shaft core; 140: shaft sleeve; 141: first shaft sleeve; 1411: boss structure; 142: second shaft sleeve; 1421: groove structure; 143: third shaft sleeve; 150: cantilever; 151: connecting rib; 160: compression spring, 170: stop structure; 180: torsion spring;
200: foldable device; 210: first body; 220: second body; 230: flexible decorative layer.

### DESCRIPTION OF EMBODIMENTS

The following describes the implementations of this application in detail. Examples of the implementations are shown in the accompanying drawings. Same or similar reference numerals always represent same or similar elements or elements having same or similar functions. The implementations described below with reference to the accompanying drawings are examples, and are merely used to describe this application, but cannot be understood as a limitation on this application.

In the descriptions of this application, it should be noted that, unless otherwise specified and limited, the terms "install" and "connect" should be understood in a broad sense. For example, the terms may indicate a fixed connection, a detachable connection, or an integrated connection, may indicate a mechanical connection, an electrical connection, or mutual communication, and may indicate a direct connection, an indirect connection through an intermediate medium, internal communication between two elements, or an interaction relationship between two elements. A person of ordinary skill in the art may interpret specific meanings of the foregoing terms in this application based on specific cases.

In the descriptions of this application, it should be understood that an orientation or a position relationship indicated by the term such as "above", "below", "beside", "front", or "back" is an orientation or a position relationship based on installation, and is used merely intended to facilitate and simplify the descriptions of this application, but is not intended to indicate or imply that an indicated apparatus or element needs to have a particular orientation or needs to be constructed and operated in a particular orientation. Therefore, such term should not be understood as a limitation on this application.

It should be further noted that a same reference numeral in embodiments of this application represents a same component part or a same part or component. For a same part or component in embodiments of this application, only one part or component may be marked with a reference numeral as an example in the figure. It should be understood that, for another same part or component, the reference numeral is also applicable.

In the descriptions of this application, unless otherwise specified, "a plurality of" means two or more. In the descriptions of this application, it should be noted that the term "and/or" merely describes an association relationship between associated objects and represents that three relationships may exist. For example, A and/or B may represent the following three cases: Only A exists, both A and B exist, and only B exists.

Embodiments of this application provide a hinge structure and a foldable device. Two shaft sleeves that respectively belong to two different bearing brackets are disposed to form a "concave wheel-cam mechanism", to implement angle locking of the hinge, which is simple, efficient, and easy to implement, and has no special requirement on material selection and sizes of a shaft core and the shaft sleeve, so that production and implementation costs of the hinge structure can be reduced.

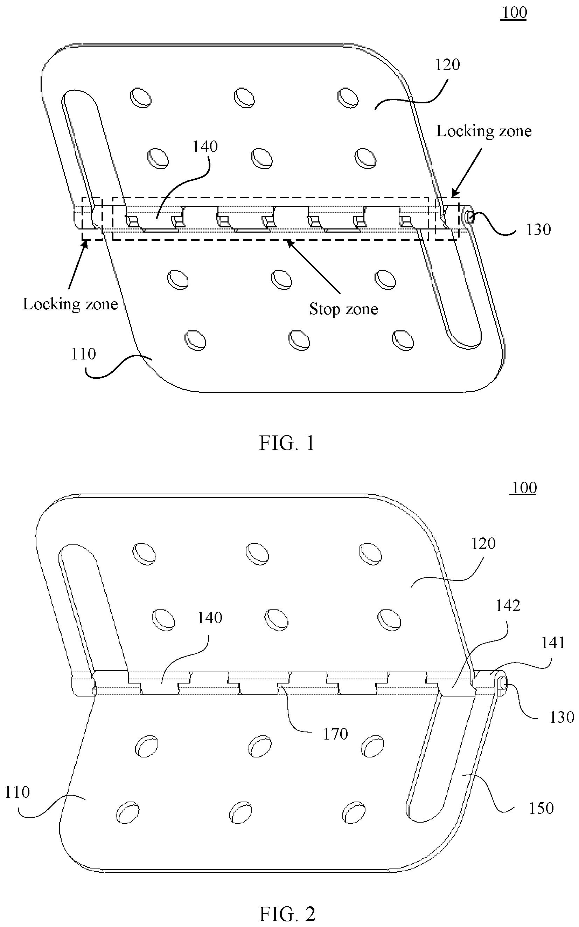

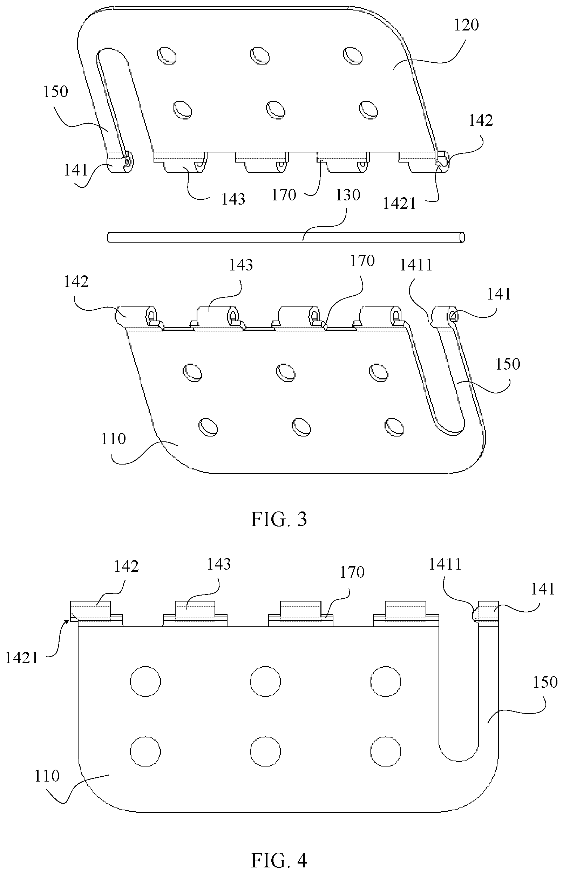

FIG. 1 is a diagram of a structure of a hinge structure 100 in a closed state according to an embodiment of this application. FIG. 2 is a diagram of a structure of the hinge structure 100 shown in FIG. 1 in an open state. FIG. 3 is an exploded view of the hinge structure 100 shown in FIG. 1. As shown in FIG. 1 to FIG. 3, the hinge structure 100 provided in this embodiment of this application includes a first bearing bracket 110, a second bearing bracket 120, a shaft core 130, and a plurality of shaft sleeves 140 sleeved in parallel on the shaft core 130.

One end of the first bearing bracket 110 is configured to be fastened to a first body (for example, a support plate of a tablet computer protective case) of a foldable device, at least one shaft sleeve 140 including a first shaft sleeve 141 is fastened on the other end, and the first shaft sleeve 141 is sleeved on the shaft core 130. One end of the second bearing bracket 120 is configured to be fastened to a second body (for example, a back plate of the tablet computer protective case) of the foldable device, at least one shaft sleeve 140 including a second shaft sleeve 142 is fastened on the other end, and the second shaft sleeve 142 is sleeved on the shaft core 130.

At least one of the first shaft sleeve 141 and the second shaft sleeve 142 is rotatably sleeved on the shaft core 130, and the first bearing bracket 110 is hinged to the second bearing bracket 120 by using the first shaft sleeve 141, the shaft core 130, and the second shaft sleeve 142 sequentially, so that the first body of the foldable device can be driven to rotate and fold relative to the second body.

Optionally, the first bearing bracket 110 and the second bearing bracket 120 in this application may be sheet-like structures with any shape such as a rectangle, and the bearing bracket may be designed to be hollowed out. The shaft sleeve 140 may be a rolled structure or an earring structure. The shaft core 130 may be a long straight shaft shown in FIG. 3, or may be any rotating shaft structure such as a rivet or a pin.

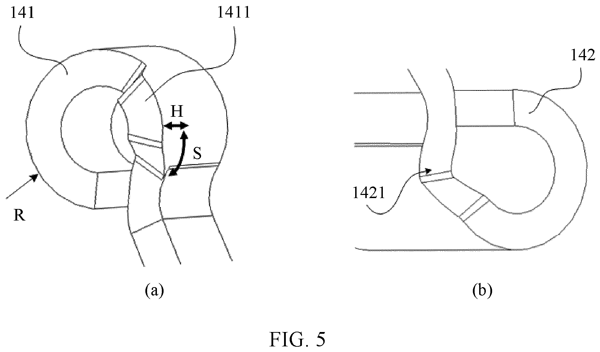

FIG. 4 is a diagram of a connection relationship of a first bearing bracket 110 in FIG. 1. FIG. 5 is a diagram of end faces of a first shaft sleeve 141 and a second shaft sleeve 142. As shown in FIG. 2 to FIG. 5, in this embodiment of this application, the first shaft sleeve 141 and the second shaft sleeve 142 are disposed adjacent to each other, and a boss structure 1411 that protrudes along an axial direction is disposed on an end face of a side that is of the first shaft sleeve 141 and that faces the second shaft sleeve 142, so that the first shaft sleeve 141 forms a "cam structure". A groove structure 1421 that is concave along the axial direction is provided on an end face of a side that is of the second shaft sleeve 142 and that faces the first shaft sleeve 141, so that the second shaft sleeve 142 forms a "concave wheel structure". The boss structure 1411 and the groove structure 1421 cooperate with each other to operate, to rotatably connect the first shaft sleeve 141 and the second shaft sleeve 142 in series, so that the first shaft sleeve 141 and the second shaft sleeve 142 form a "concave wheel-cam mechanism" as a whole.

As shown in FIG. 2 to FIG. 5, the hinge structure 100 provided in this embodiment of this application further includes an elastic member (for example, a cantilever 150 in the figure). The elastic member is configured to apply elastic force to the first shaft sleeve 141 or the second shaft sleeve 142, so that the end face of the first shaft sleeve 141 and the end face of the second shaft sleeve 142 can always be in close contact in a rotation process, and is configured to, when the first bearing bracket 110 and the second bearing bracket 120 rotate relative to each other to a preset angle, for example, rotate from the closed state in FIG. 1 to the open state in FIG. 2 (the closed state and the open state herein mean states of the first body of the foldable device such as the support plate of the tablet computer protective case), enable the boss structure 1411 and the groove structure 1421 to be embedded into each other. For example, the boss structure 1411 is embedded into the groove structure 1421. In this case, the first shaft sleeve 141 cannot continue to rotate relative to the second shaft sleeve 142. In other words, the first bearing bracket 110 and the second bearing bracket 120 cannot continue to rotate relative to each other, so that rotation angles of the first bearing bracket 110 and the second bearing bracket 120 are fixed or locked (lock).

Optionally, the elastic member in this embodiment of this application may be any elastic element that can apply the elastic force to the first shaft sleeve 141 or the second shaft sleeve 142, so that the two end faces are always in a close contact. According to this embodiment, the elastic member is the cantilever 150 in FIG. 3 to FIG. 5, or may be a compression spring, a tension spring, a spring plate, or the like, but is not limited thereto.

Optionally, the preset angle herein may be any angle. For example, the first bearing bracket 110 shown in FIG. 2 may rotate 40 to 100 degrees in a direction perpendicular to the outside of paper relative to the second bearing bracket 120. For example, the preset angle may be 60 degrees, 65 degrees, 80 degrees, or the like, but is not limited thereto.

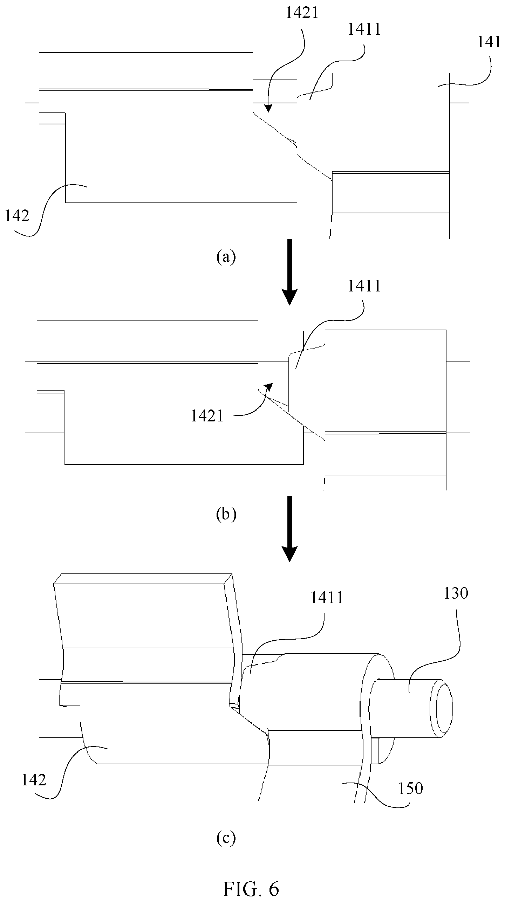

FIG. 6 is a diagram of a process in which a boss structure 1411 and a groove structure 1421 are embedded into each other. As shown in FIG. 1 and (a) in FIG. 6, when the hinge structure 100 is in the closed state, the boss structure 1411 and the groove structure 1421 are staggered, a front end face of the boss structure 1411 pushes against a position on the end face of the second shaft sleeve 142 other than the groove structure 1421, and the cantilever 150 slightly opens outward. Under elastic action of the cantilever 150, small torsion force (damping) can be generated in the process in which the first bearing bracket 110 and the second bearing bracket 120 rotate relative to each other. In this case, the two bearing brackets do not enter a locked (fixed) state.

As shown in (b) and (c) in FIG. 6, as the first bearing bracket 110 and the second bearing bracket 120 rotate relative to each other to a maximum angle, the boss structure 1411 and the groove structure 1421 gradually face each other directly, until the boss structure 1411 and the groove structure 1421 completely faces each other directly. Under action of elastic force of the cantilever 150, the boss structure 1411 is embedded into the groove structure 1421. In this case, a side wall slope (a downhill slope) of the boss structure 1411 is in contact with a side wall surface of the groove structure 1421, the cantilever 150 is tightened inward along the axial direction to provide self-locking force, and the hinge structure 100 enters the locked state (the open state) shown in FIG. 2. In this way, the support plate of the tablet computer protective case can be supported to hover at the position without swinging. When the locked state needs to be released, a user may apply large acting force in an opposite direction, to overcome the self-locking force (elastic force) of the cantilever 150, so that the boss structure 1411 can be detached from the groove structure 1421. In this case, the hinge structure 100 may be restored to the closed state shown in FIG. 1 again.

As shown in FIG. 5, the end face of the first shaft sleeve 141 and the end face of the second shaft sleeve 142 should be designed to be as smooth as possible, and edges of the boss structure 1411 and the groove structure 1421 may be designed to be chamfered, so that rotation of the first shaft sleeve 141 relative to the second shaft sleeve 142 can be smooth and controllable. Sizes of the boss structure 1411 and the groove structure 1421 should adapt to each other. For example, a depth of the groove structure 1421 should be comparable to a height of the boss structure 1411, and a tilt angle of a slot wall of the groove structure 1421 may be set to be relatively small, so that the boss structure 1411 is conveniently detached from the groove structure 1421.

According to the hinge structure 100 provided in this embodiment of this application, the boss structure 1411 is disposed on the end face of the first shaft sleeve 141 on the first bearing bracket 110, and the end face of the second shaft sleeve 142 on the second bearing bracket 120 is provided with the groove structure 1421 that cooperates with the boss structure 1411 to operate, so that the first shaft sleeve 141 and the second shaft sleeve 142 can form the "concave wheel-cam mechanism". When the first bearing bracket 110 rotates relative to the second bearing bracket 120 to the preset angle, the boss structure 1411 and the groove structure 1421 face each other directly. In this case, under action of the elastic force of the elastic member, the boss structure 1411 can be embedded into the groove structure 1421, so that the rotation angles of the first bearing bracket 110 and the second bearing bracket 120 are locked. The hinge structure 100 provided in this embodiment of this application is different from a hinge structure in a conventional flat position design solution in that a structure is simple, processing is easy, and there is no special requirement on material selection and sizes of the shaft core and the shaft sleeve. This helps reduce production and implementation costs of the hinge structure 100 and improve product competitiveness. In addition, according to the hinge structure 100 provided in this embodiment of this application, a size of the shaft sleeve 140 can be designed to be smaller, and that a product appearance does not protrude at a rotating shaft can be implemented. This can ensure appearance consistency and help reduce a thickness of the product.

As shown in FIG. 2 to FIG. 4, the elastic member includes the cantilever 150, the first shaft sleeve 141 is elastically connected to the first bearing bracket 110 by using the cantilever 150, and the second shaft sleeve 142 is fastened at an edge of the second bearing bracket 120. The cantilever 150 may be a straight-strip-shaped structure, one end may be connected to an edge of an outer side that is of the first bearing bracket 110 and that is away from the second bearing bracket 120, and the other end on which the first shaft sleeve 141 is disposed extends from the edge of the outer side to an edge of an inner side, to ensure that the cantilever 150 is long enough to increase the elastic force. The second shaft sleeve 142 is fastened at an edge of the second bearing bracket 120, to help ensure that the first shaft sleeve 141 does not move in a process of pressing the second shaft sleeve 142 tightly.

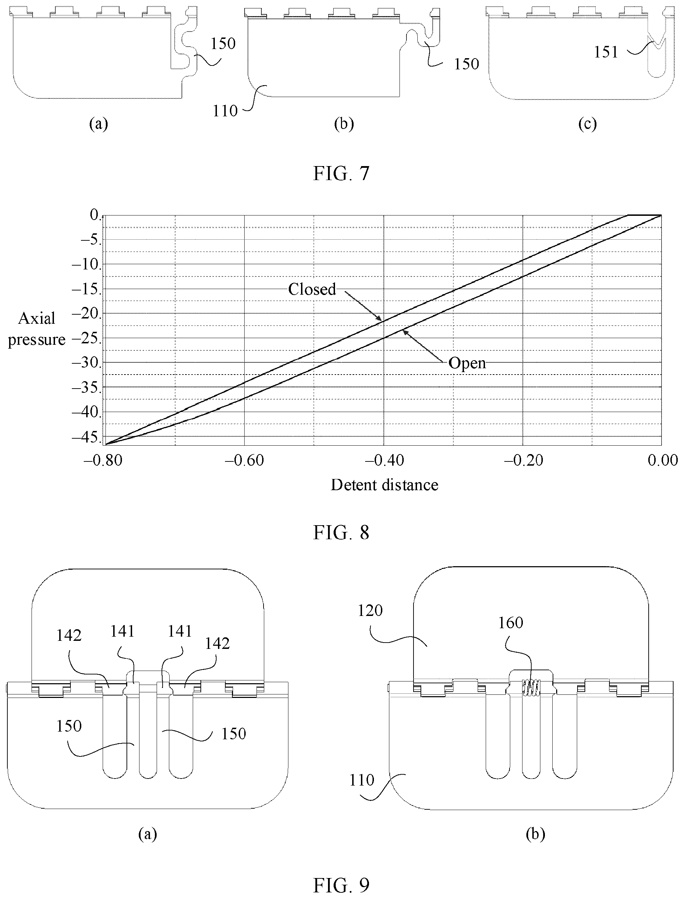

FIG. 7 is a diagram of a structure of a cantilever 150 in a plurality of different implementations. As shown in (a) and (b) in FIG. 7, in another implementation, the cantilever 150 may alternatively be a bent structure or a winding structure, to help increase the elastic force of the cantilever 150. As shown in (c) in FIG. 7, a connecting rib 151 may be further connected between the middle of the cantilever 150 and the first bearing bracket 110, to better control the elastic force of the cantilever 150.

Optionally, the height of the boss structure 1411, a length of the cantilever 150, a skew angle of the cantilever 150, or the like may be further controlled, to control the locking elastic force.

Optionally, in another implementation, the second shaft sleeve 142 may alternatively be elastically connected to the second bearing bracket 120 by using the cantilever 150, and the first shaft sleeve 141 is fastened at the edge of the first bearing bracket 110.

As shown in FIG. 4 and FIG. 5, for locking between the boss structure 1411 and the groove structure 1421, a locking torque M should meet the following relational expression: $M = {F}_{t} ∗ tan \left[{arctanθ}_{1}+{arctanθ}_{2}\right] ∗ R$

*θ*₁ and *θ*₂ are parameters related to a detent angle of locking and a friction state, and *R* is an outer diameter of the first shaft sleeve 141. A specific detailed parameter is not described herein. *Fₜ* is axial pressure applied on the boss structure 1411 after the cantilever 150 deforms. For a simple cantilever structure, *Fₜ* may be estimated by using the following formula: ${F}_{t} = \frac{3 EI}{{l}^{3}} ∗ x$

E is a Young's modulus of a material, l is a cantilever length, I is a cross-sectional moment of inertia, and x is a deformation amount of the cantilever 150 in the axial direction (related to the height H of the boss). If a cantilever structure in an irregular shape is used, a finite element method is usually used to simulate a change of axial pressure. FIG. 8 is a curve graph of a change of axial pressure and a detent distance for a specific cantilever size parameter. A curve trend is as follows (the curve is adjusted accordingly as the parameter changes): As the detent distance (angle) increases, a force value increases, and the locking peak torque also increases.

As shown in FIG. 2 to FIG. 4, in this embodiment of this application, the first shaft sleeve 141 is disposed on an edge of a first side that is of the first bearing bracket 110 and that is in the axial direction, and the second shaft sleeve 142 is correspondingly disposed on an edge of the first side of the second bearing bracket 120. The foregoing disposition can facilitate processing and molding of the boss structure 1411 and the groove structure 1421.

Optionally, the boss structure 1411 may be integrally molded on the end face of the first shaft sleeve 141 by using an integrated molding process, and the groove structure 1421 may be integrally molded on the end face of the second shaft sleeve 142 by using an integrated molding process.

Optionally, the first bearing bracket 110, the shaft sleeve 140 (for example, the first shaft sleeve 141), and the cantilever 150 may form an integrated structure by using an integrated molding process. For example, the integrated structure may be a sheet metal punching member made by using processes such as sheet metal punching and rolling. This helps reduce processing costs and improve production efficiency.

Optionally, a plurality of pairs of first shaft sleeve 141 and second shaft sleeve 142 may be correspondingly disposed, so that locking reliability can be improved.

For example, in this embodiment of this application, as shown in FIG. 1 to FIG. 3, another second shaft sleeve 142 is further disposed on an edge of the other side that is of the first bearing bracket 110 and that is in the axial direction, and another first shaft sleeve 141 is further correspondingly disposed on an edge of the other side of the second bearing bracket 120, the first shaft sleeve 141 may be connected to the second bearing bracket 120 by using another cantilever 150. In this case, the hinge structure 100 may be locked by using two pairs of locking components, so that locking reliability can be improved. In addition, in this case, structures of two hinged parts on two sides of the shaft core 130 are the same. This helps simplify processing steps and improve production (assembling) efficiency.

Optionally, in this embodiment of this application, a plurality of pairs of boss structures 1411 and groove structures 1421 may be correspondingly disposed. The boss structure 1411 may be disposed on an end face of any shaft sleeve according to an actual requirement, the groove structure 1421 and the boss structure 1411 are correspondingly disposed, and all the groove structures 1421 and the boss structures 1411 that are disposed in pairs can cooperate to operate, to implement the foregoing locking function, so that locking reliability can be improved.

For example, the other end face of the first shaft sleeve 141 may be further provided with the boss structure 1411 or the groove structure 1421. In other words, both the two end faces of the first shaft sleeve 141 are designed to be in a special shape, and the boss structure 1411 or the groove structure 1421 is separately designed and molded on the two end faces; and/or the other end face of the second shaft sleeve 142 may be further provided with the boss structure 1411 or the groove structure 1421. In other words, both the two end faces of the second shaft sleeve 142 are designed to be in a special shape, and the boss structure 1411 or the groove structure 1421 is separately designed and molded on the two end faces. This is not limited in this application.

Optionally, the second bearing bracket 120, the plurality of shaft sleeves 140 including the second shaft sleeve 142, and the cantilever 150 may alternatively be molded into an integrated structure by using a sheet metal punching process.

As shown in FIG. 1 to FIG. 4, in this embodiment of this application, at least one third shaft sleeve 143 is further spaced between the first shaft sleeve 141 and the second shaft sleeve 142 on the first bearing bracket 110; and/or at least one third shaft sleeve 143 is further spaced between the first shaft sleeve 141 and the second shaft sleeve 142 on the second bearing bracket 120. The third shaft sleeve 143 herein is a common shaft sleeve whose end face is not provided with the boss structure 1411 or the groove structure 1421, and only performs a hinging function. At least one third shaft sleeve 143 is disposed, so that connection reliability can be improved.

Optionally, a quantity of third shaft sleeves 143 on the first bearing bracket 110 may be the same as or different from a quantity of third shaft sleeves 143 on the second bearing bracket 120.

Optionally, in another implementation, one or more third shaft sleeves 143 may be disposed only on one of the first bearing bracket 110 and the second bearing bracket 120, and no third shaft sleeve 143 may be disposed on the other of the first bearing bracket 110 and the second bearing bracket 120.

Optionally, in another implementation, the third shaft sleeve 143 may not be disposed on either the first bearing bracket 110 or the second bearing bracket 120, and the first bearing bracket 110 and the second bearing bracket 120 are hinged and locked by using only two pairs of first shaft sleeves 141 and second shaft sleeves 142 that are located at edges.

Optionally, in another implementation, the first bearing bracket 110 and the second bearing bracket 120 may alternatively be hinged and locked by using only one pair of first shaft sleeve 141 and second shaft sleeve 142.

As shown in FIG. 1 to FIG. 4, in this embodiment of this application, at least one stop structure 170 is disposed on each of the first bearing bracket 110 and the second bearing bracket 120. When the first bearing bracket 110 and the second bearing bracket 120 rotate relative to each other to the foregoing preset angle, the stop structure 170 on the first bearing bracket 110 and the stop structure 170 on the second bearing bracket 120 abut against and limit each other. Through the foregoing disposing, when the first bearing bracket 110 and the second bearing bracket 120 rotate relative to each other to the preset angle (for example, a maximum angle), the stop structures 170 on the two bearing brackets abut against each other, so that the first bearing bracket 110 can be prevented from further rotating relative to the second bearing bracket 120.

Optionally, a plurality of stop structures 170 may be disposed on each bearing bracket.

Optionally, the stop structure 170 on each bearing bracket may be the same or different.

Optionally, one or two stop structures 170 may be disposed on each side part of each third shaft sleeve 143.

As shown in FIG. 1 to FIG. 4, in this embodiment of this application, one stop structure 170 is disposed on each of two sides of each third shaft sleeve 143, and one stop structure 170 is further disposed on an inner side of the second shaft sleeve 142. In this case, seven stop structures 170 are disposed on each bearing bracket, and the seven stop structures 170 on the first bearing bracket 110 correspondingly abut against the seven stop structures 170 on the second bearing bracket 120, so that a larger force value can be borne, and stop strength can be increased. As shown in FIG. 1, in this case, middle parts of the two bearing brackets may form a stop zone, and edges on two sides each form a locking zone.

FIG. 9 is a diagram of a structure of another hinge structure 100 according to an embodiment of this application. As shown in (a) in FIG. 9, a plurality of first shaft sleeves 141 are disposed on the first bearing bracket 110, and each of the plurality of first shaft sleeves 141 is connected to the first bearing bracket 110 by using one cantilever 150. A plurality of second shaft sleeves 142 are fastened on the edge of the second bearing bracket 120, and the plurality of first shaft sleeves 141 and the plurality of second shaft sleeves 142 are disposed in a one-to-one correspondence, so that locking reliability can be improved.

As shown in (b) in FIG. 9, the elastic member further includes a compression spring 160 sleeved on the shaft core 130. The compression spring 160 is sleeved on the shaft core 130, and is pre-pressed tightly between two first shaft sleeves 141, to apply squeezing force to the two first shaft sleeves 141, so that the two first shaft sleeves 141 each can be reliably attached onto a corresponding second shaft sleeve 142.

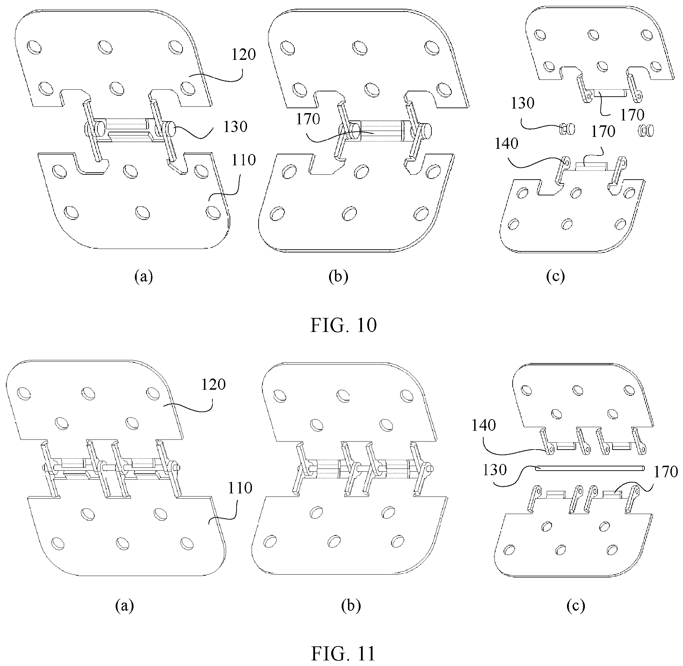

FIG. 10 is a diagram of a structure of still another hinge structure 100 according to an embodiment of this application. With reference to content shown in (a), (b), and (c) in FIG. 10, in the foregoing embodiments, the shaft sleeve 140 is a circular wrapping structure. The shaft sleeve 140 in this embodiment is an earring structure, and is connected to the bearing bracket by using one connecting arm. The shaft core 130 in this embodiment is a rivet structure. Two rivets are spaced from each other, and each are connected to two shaft sleeves 140 on two sides. The stop structure 170 is located between the two shaft sleeves 140, so that the stop structure 170 has a wider width to ensure sufficient stop strength.

FIG. 11 is a diagram of a structure of yet another hinge structure 100 according to an embodiment of this application. With reference to content shown in (a), (b), and (c) in FIG. 11, the hinge structure 100 shown in FIG. 11 is different from the hinge structure in the embodiment shown in FIG. 10 in that a plurality of stop structures 170 are arrayed to increase stop strength, and the shaft core 130 is designed as a long straight shaft to implement hinging of the two bearing brackets.

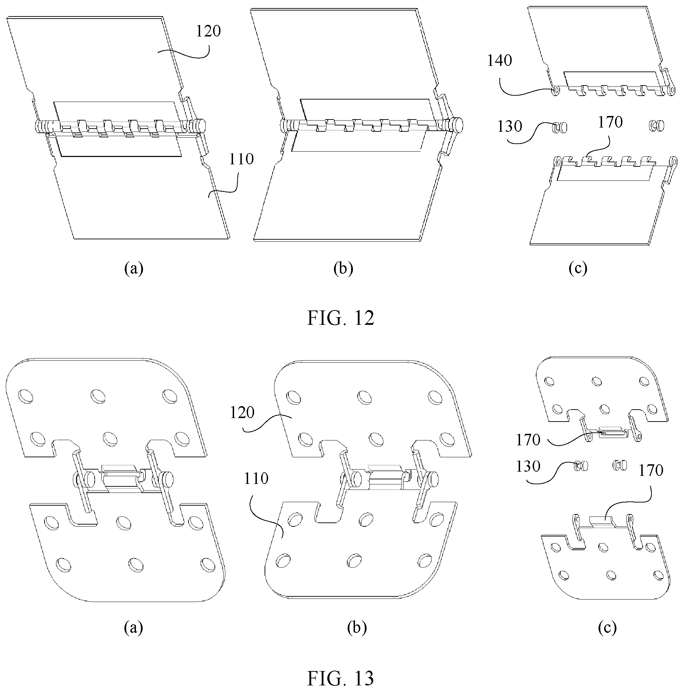

FIG. 12 is a diagram of a structure of still yet another hinge structure 100 according to an embodiment of this application. With reference to content shown in (a), (b), and (c) in FIG. 12, the hinge structure 100 shown in FIG. 12 is different from the hinge structures in embodiments shown in FIG. 10 and FIG. 11 in that the stop structure 170 is designed as a pair of toothed structures that can be engaged with each other, to increase a stop area of the two bearing brackets.

FIG. 13 is a diagram of a structure of a further hinge structure 100 according to an embodiment of this application. With reference to content shown in (a), (b), and (c) in FIG. 13, the hinge structure 100 shown in FIG. 13 is different from the hinge structures in embodiments shown in FIG. 10, FIG. 11, and FIG. 12 in that the hinge structure 100 shown in FIG. 13 is a snap-fit stop structure, one stop structure 170 is configured as a groove structure, the other stop structure 170 is configured to be in a plug shape, and the plug structure can be inserted into the groove structure, to implement snap-fit stopping. In this embodiment, a case in which the rotating shaft loses the stop function due to stop misalignment when the rotating shaft is subject to force can be avoided.

Although related locking structures related to the first shaft sleeve 141 and the second shaft sleeve 142 are not shown in the hinge structures 100 shown in FIG. 10 to FIG. 13, a related locking assembly may be designed with reference to a principle of the foregoing embodiments to implement locking. Details are not described herein again in this application.

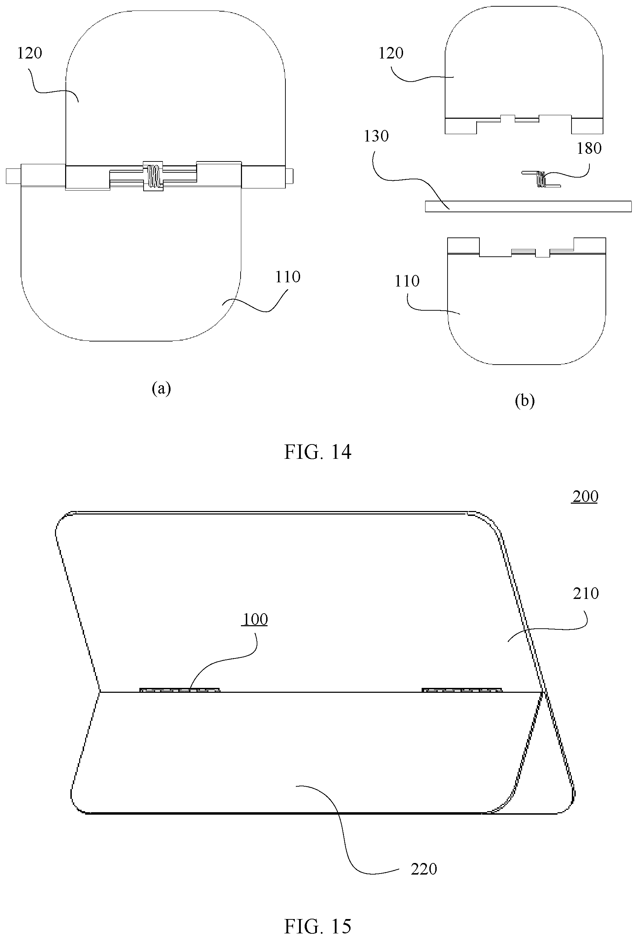

FIG. 14 is a diagram of a structure of a still further hinge structure 100 according to an embodiment of this application. With reference to content shown in (a) and (b) in FIG. 14, the hinge structure 100 shown in FIG. 14 is different from the hinge structures in the foregoing embodiments in that one or more groups of torsion springs 180 are placed between the two bearing brackets. When the hinge mechanism is opened from 0 degrees, the spring is tightened, so that the hinge mechanism can pop open to a maximum angle, to achieve locking effect. This embodiment is different from the foregoing embodiments in that a requirement on magnet attraction force corresponding to a case in which the hinged structure is closed is higher.

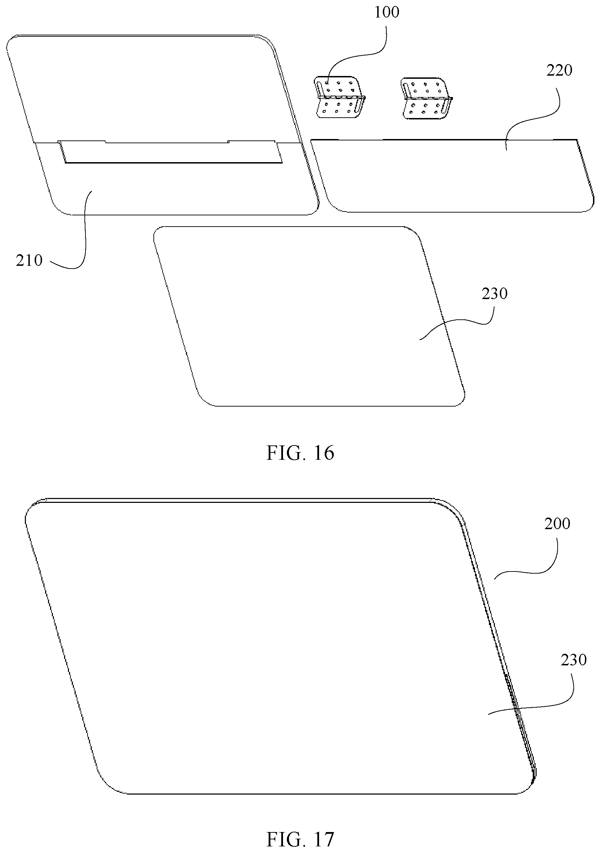

An embodiment of this application further provides a foldable device. FIG. 15 is a diagram of a structure of a foldable device 200 according to an embodiment of this application. FIG. 16 is an exploded view of the foldable device 200 shown in FIG. 15. As shown in FIG. 15 and FIG. 16, the foldable device 200 provided in this embodiment of this application includes a first body 210, a second body 220, and the hinge structure 100 provided in any one of the foregoing embodiments. The first bearing bracket 110 of the hinge structure 100 is fastened (for example, bonded, riveted, or thread-connected) to the first body 210, and the second bearing bracket 120 is fastened to the second body 220. The first body 210 and the second body 220 are hinged by using the hinge structure 100, so that the first body 210 can be flipped and folded relative to the second body 220, and can be locked at a preset flipping angle, that is, kept at an opening or closing angle required by the user.

The foldable device 200 provided in this embodiment of this application is any product that can use the hinge structure 100 and needs to perform flip angle locking, including but is not limited to a tablet computer protective case having a supporting function, a keyboard support protective case, a door, a Bluetooth headset case, a glasses case, and the like. In addition, the foldable device may alternatively be an electronic device, for example, a notebook computer, a foldable mobile phone, a drone, a desk lamp, or a camera, an accessory of each of the foregoing electronic devices, and the like. This is not specially limited in this application. In this embodiment, an example in which the foldable device 200 is a tablet computer protective case is used for description.

As shown in FIG. 15 and FIG. 16, the first body 210 may be a back plate, and the second body 220 may be a support plate. The support plate is disposed on the back plate in a foldable manner by using the hinge structure 100 provided in this embodiment of this application, and can be locked at an opening or closing angle (for example, 60 degrees) required by the user, so that the user conveniently view content displayed on a screen. In this case, even if the tablet computer protective case is picked up by the user together with the tablet computer, the support plate does not swing.

FIG. 17 is a diagram of a structure of the foldable device 200 shown in FIG. 16 in a closed state. As shown in FIG. 16 and FIG. 17, the tablet computer protective case may further include a flexible decorative layer 230 that is made of a flexible material (for example, leather) and that covers outer side surfaces of the back plate and the support plate. Positions at which a hinge is installed on the back plate and the support plate are designed to be thinner, and the flexible decorative layer 230 is attached to outer surfaces of the back plate and the support plate, so that the shaft core 130 of the hinge structure 100 can be not protruding, and appearance flatness is ensured.

Because the foldable device 200 uses the hinge structure 100 provided in the foregoing embodiments, the foldable device 200 also has technical effect corresponding to that of the hinge structure 100. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hinge structure for a foldable electronic device, comprising:
a first bearing bracket (110), wherein a first shaft sleeve (141) is disposed on the first bearing bracket (110), and a boss structure (1411) is disposed on an end face of the first shaft sleeve (141);
a second bearing bracket (120), wherein a second shaft sleeve (142) is disposed on the second bearing bracket (120), and a groove structure (1421) is provided on an end face of the second shaft sleeve (142);
a shaft core (130), wherein the first shaft sleeve (141) and the second shaft sleeve (142) are sleeved in parallel on the shaft core (130); and
an elastic member, configured to, when the first bearing bracket (110) and the second bearing bracket (120) rotate relative to each other to a preset angle, enable the boss structure (1411) and the groove structure (1421) to be embedded into each other to lock a rotation angle, wherein the elastic member comprises a cantilever (150), and the first shaft sleeve (141) is elastically connected to the first bearing bracket (110) through the cantilever (150), and the second shaft sleeve (142) is fastened at an edge of the second bearing bracket (120); or
the second shaft sleeve (142) is elastically connected to the second bearing bracket (120) through the cantilever (150), and the first shaft sleeve (141) is fastened at an edge of the first bearing bracket (110).

2. The hinge structure according to claim 1, wherein the cantilever (150) is a straight-strip-shaped structure or a bent structure.

3. The hinge structure according to any one of claims 1 or 2, wherein the elastic member further comprises a compression spring (160) sleeved on the shaft core (130).

4. The hinge structure according to any one of claims 1 or 2, wherein the first shaft sleeve (141) is disposed on an edge of a first side that is of the first bearing bracket (110) and that is in an axial direction, and the second shaft sleeve (142) is correspondingly disposed on an edge of the first side of the second bearing bracket (120).

5. The hinge structure according to claim 4, wherein another second shaft sleeve (142) is further disposed on an edge of the other side that is of the first bearing bracket (110) and that is in the axial direction, and another first shaft sleeve (141) is further correspondingly disposed on an edge of the other side of the second bearing bracket (120).

6. The hinge structure according to claim 5, wherein at least one third shaft sleeve (143) is further spaced between the first shaft sleeve (141) and the second shaft sleeve (142) on the first bearing bracket (110); and/or at least one third shaft sleeve (143) is further spaced between the first shaft sleeve (141) and the second shaft sleeve (142) on the second bearing bracket (120).

7. The hinge structure according to any one of claims 1 or 2, wherein a plurality of first shaft sleeves (141) are disposed on the first bearing bracket (110), a plurality of second shaft sleeves (142) are disposed on the second bearing bracket (120), and the plurality of first shaft sleeves (141) and the plurality of second shaft sleeves (142) are disposed in a one-to-one correspondence.

8. The hinge structure according to any one of claims 1, 2, 5, and 6, wherein at least one stop structure (170) is disposed on each of the first bearing bracket (110) and the second bearing bracket (120), and when the first bearing bracket (110) and the second bearing bracket (120) rotate relative to each other to the preset angle, the stop structure (170) on the first bearing bracket (110) and the stop structure (170) on the second bearing bracket (120) abut against and limit each other.

9. A foldable electronic device, comprising a first body (210), a second body (220), and the hinge structure according to any one of claims 1 to 8, wherein the hinge structure is hinged to the first body (210) and the second body (220).

## Patentansprüche

1. Scharnierstruktur für eine klappbare elektronische Vorrichtung, umfassend:
eine erste Lagerhalterung (110), wobei eine erste Wellenhülse (141) auf der ersten Lagerhalterung (110) angeordnet ist und eine Buckelstruktur (1411) auf einer Endfläche der ersten Wellenhülse (141) angeordnet ist;
eine zweite Lagerhalterung (120), wobei an der zweiten Lagerhalterung (120) eine zweite Wellenhülse (142) angeordnet ist und an einer Endfläche der zweiten Wellenhülse (142) eine Nutstruktur (1421) bereitgestellt ist;
einen Wellenkern (130), wobei die erste Wellenhülse (141) und die zweite Wellenhülse (142) parallel auf den Wellenkern (130) aufgesteckt sind; und
ein elastisches Element, das dazu konfiguriert ist, wenn sich die erste Lagerhalterung (110) und die zweite Lagerhalterung (120) relativ zueinander auf einen voreingestellten Winkel drehen, zu ermöglichen, dass die Buckelstruktur (1411) und die Nutstruktur (1421) ineinander eingeschlossen werden, um einen Drehwinkel zu fixieren, wobei das elastische Element einen Ausleger (150) umfasst und die erste Wellenhülse (141) über den Ausleger (150) elastisch mit der ersten Lagerhalterung (110) verbunden ist und die zweite Wellenhülse (142) an einer Kante der zweiten Lagerhalterung (120) befestigt ist; oder
die zweite Wellenhülse (142) über den Ausleger (150) elastisch mit der zweiten Lagerhalterung (120) verbunden ist und die erste Wellenhülse (141) an einer Kante der ersten Lagerhalterung (110) befestigt ist.

2. Scharnierstruktur nach Anspruch 1, wobei der Ausleger (150) eine gerade, streifenförmige oder gebogene Struktur ist.

3. Scharnierstruktur nach einem der Ansprüche 1 oder 2, wobei das elastische Element ferner eine auf den Wellenkern (130) aufgesteckte Druckfeder (160) umfasst.

4. Scharnierstruktur nach einem der Ansprüche 1 oder 2, wobei die erste Wellenhülse (141) an einer Kante einer ersten Seite, die zu der ersten Lagerhalterung (110) gehört und die in einer axialen Richtung verläuft, angeordnet ist und die zweite Wellenhülse (142) entsprechend an einer Kante der ersten Seite der zweiten Lagerhalterung (120) angeordnet ist.

5. Scharnierstruktur nach Anspruch 4, wobei eine weitere zweite Wellenhülse (142) ferner an einer Kante der anderen Seite, die zu der ersten Lagerhalterung (110) gehört und die in der axialen Richtung verläuft, angeordnet ist und eine weitere erste Wellenhülse (141) ferner entsprechend an einer Kante der anderen Seite der zweiten Lagerhalterung (120) angeordnet ist.

6. Scharnierstruktur nach Anspruch 5, wobei mindestens eine dritte Wellenhülse (143) ferner zwischen der ersten Wellenhülse (141) und der zweiten Wellenhülse (142) an der ersten Lagerhalterung (110) beabstandet ist; und/oder mindestens eine dritte Wellenhülse (143) ferner zwischen der ersten Wellenhülse (141) und der zweiten Wellenhülse (142) an der zweiten Lagerhalterung (120) beabstandet ist.

7. Scharnierstruktur nach einem der Ansprüche 1 oder 2, wobei eine Vielzahl von ersten Wellenhülsen (141) an der ersten Lagerhalterung (110) angeordnet ist, eine Vielzahl von zweiten Wellenhülsen (142) an der zweiten Lagerhalterung (120) angeordnet ist und die Vielzahl von ersten Wellenhülsen (141) und die Vielzahl von zweiten Wellenhülsen (142) in einer Einszu-eins-Entsprechung angeordnet sind.

8. Scharnierstruktur nach einem der Ansprüche 1, 2, 5 und 6, wobei mindestens eine Anschlagstruktur (170) an jeder von der ersten Lagerhalterung (110) und der zweiten Lagerhalterung (120) angeordnet ist und, wenn sich die erste Lagerhalterung (110) und die zweite Lagerhalterung (120) relativ zueinander zu dem voreingestellten Winkel drehen, die Anschlagstruktur (170) an der ersten Lagerhalterung (110) und die Anschlagstruktur (170) an der zweiten Lagerhalterung (120) aneinander anliegen und sich gegenseitig beschränken.

9. Klappbare elektronische Vorrichtung, umfassend einen ersten Körper (210), einen zweiten Körper (220) und die Scharnierstruktur nach einem der Ansprüche 1 bis 8, wobei die Scharnierstruktur an dem ersten Körper (210) und dem zweiten Körper (220) angelenkt ist.

## Revendications

1. Structure de charnière pour un dispositif électronique pliable, comprenant :
un premier support de palier (110), dans laquelle un premier manchon d'arbre (141) est disposé sur le premier support de palier (110), et une structure de bossage (1411) est disposée sur une face d'extrémité du premier manchon d'arbre (141) ;
un second support de palier (120), dans laquelle un deuxième manchon d'arbre (142) est disposé sur le second support de palier (120), et une structure de rainure (1421) est prévue sur une face d'extrémité du deuxième manchon d'arbre (142) ;
un noyau d'arbre (130), dans laquelle le premier manchon d'arbre (141) et le deuxième manchon d'arbre (142) sont emmanchés en parallèle sur le noyau d'arbre (130) ; et
un élément élastique, configuré pour, lorsque le premier support de palier (110) et le second support de palier (120) tournent l'un par rapport à l'autre selon un angle prédéfini, permettre à la structure de bossage (1411) et à la structure de rainure (1421) de s'emboîter l'une dans l'autre pour bloquer un angle de rotation, dans laquelle l'élément élastique comprend un cantilever (150), et le premier manchon d'arbre (141) est relié élastiquement au premier support de palier (110) par l'intermédiaire du cantilever (150), et le deuxième manchon d'arbre (142) est fixé sur un bord du second support de palier (120) ; ou
le deuxième manchon d'arbre (142) est relié élastiquement au second support de palier (120) par l'intermédiaire du cantilever (150), et le premier manchon d'arbre (141) est fixé sur un bord du premier support de palier (110).

2. Structure de charnière selon la revendication 1, dans laquelle le cantilever (150) est une structure en forme de bande droite ou une structure courbée.

3. Structure de charnière selon l'une quelconque des revendications 1 ou 2, dans laquelle l'élément élastique comprend en outre un ressort de compression (160) emmanché sur le noyau d'arbre (130).

4. Structure de charnière selon l'une quelconque des revendications 1 ou 2, dans laquelle le premier manchon d'arbre (141) est disposé sur un bord d'un premier côté du premier support de palier (110) et qui est dans une direction axiale, et le deuxième manchon d'arbre (142) est disposé de manière correspondante sur un bord du premier côté du second support de palier (120).

5. Structure de charnière selon la revendication 4, dans laquelle un autre deuxième manchon d'arbre (142) est disposé en outre sur un bord de l'autre côté du premier support de palier (110) et qui est dans une direction axiale, et l'autre premier manchon d'arbre (141) est disposé en outre de manière correspondante sur un bord de l'autre côté du second support de palier (120).

6. Structure de charnière selon la revendication 5, dans laquelle au moins un troisième manchon d'arbre (143) est espacé en outre entre le premier manchon d'arbre (141) et le deuxième manchon d'arbre (142) sur le premier support de palier (110) ; et/ou au moins un troisième manchon d'arbre (143) est espacé en outre entre le premier manchon d'arbre (141) et le deuxième manchon d'arbre (142) sur le second support de palier (120).

7. Structure de charnière selon l'une quelconque des revendications 1 ou 2, dans laquelle une pluralité de premiers manchons d'arbre (141) sont disposés sur le premier support de palier (110), une pluralité de deuxièmes manchons d'arbre (142) sont disposés sur le second support de palier (120), et la pluralité de premiers manchons d'arbre (141) et la pluralité de deuxièmes manchons d'arbre (142) sont disposées en correspondance biunivoque.

8. Structure de charnière selon l'une quelconque des revendications 1, 2, 5 et 6, dans laquelle au moins une structure d'arrêt (170) est disposée sur chacun du premier support de palier (110) et du second support de palier (120), et lorsque le premier support de palier (110) et le second support de palier (120) tournent l'un par rapport à l'autre selon l'angle prédéfini, la structure d'arrêt (170) sur le premier support de palier (110) et la structure d'arrêt (170) sur le second support de palier (120) se butent et se limitent mutuellement.

9. Dispositif électronique pliable, comprenant un premier corps (210), un second corps (220) et la structure de charnière selon l'une quelconque des revendications 1 à 8, dans lequel la structure de charnière est articulée au premier corps (210) et au second corps (220).
